Europäisches Patentamt

**European Patent Office**

**Office européen des brevets**

(19)

(11) Numéro de publication: **0 050 085**

**A1**

(12) # DEMANDE DE BREVET EUROPEEN

(21) Numéro de dépôt: **81420143.0**

(22) Date de dépôt: **08.10.81**

(51) Int. Cl.³: **H 01 H 9/06**
**H 01 H 25/06, B 62 J 5/16**

(30) Priorité: **14.10.80 FR 8022197**

(43) Date de publication de la demande:
**21.04.82 Bulletin 82/16**

(84) Etats contractants désignés:
**AT BE DE FR IT NL**

(71) Demandeur: **ANGENIEUX-CLB S.A. Société anonyme dite:**
**11 rue de l'Egalerie**
**F-42030 Saint-Etienne Cédex (Loire)(FR)**

(84) Etats contractants désignés:
**AT BE DE FR IT NL**

(71) Demandeur: **Lauzier, René**

**Ruy F-38300 Bourgoin-Jallieu(FR)**

(84) Etats contractants désignés:
**FR**

(72) Inventeur: **Lauzier, René**
**Château de Ruy Ruy Isère**
**38300 Bourgoin Jallieu(FR)**

(74) Mandataire: **Perrier, Jean-Pierre et al,**
**Cabinet GERMAIN & MAUREAU 12 rue de la République**
**F-42000 St-Etienne(FR)**

(54) **Commutateur électrique de poignée pour cyclomoteurs, motocyclettes et similaires.**

(57) Ce commutateur est du type composé d'un boîtier (7-8) rapporté sur le guidon (1) et d'un bouton de commande (23) actionnant des chariots intermédiaires (14-17).

Selon l'invention, ces chariots, de type coulissant, comportent chacun au moins un curseur de jonction (27) apte à coopérer avec des pistes conductrices (28a-28b) qui, ayant l'exclusivité des fonctions d'alimentation et de distribution, font partie de barrettes noyées dans les éléments fixes (7-9) du boîtier.

FIG.5

EP 0 050 085 A1

Croydon Printing Company Ltd.

Commutateur électrique de poignée pour cyclomoteurs, motocyclettes et similaires" -

La présente invention a pour objet un commutateur électrique de poignée placé sur le guidon de véhicules motorisés à deux roues, tels que cyclomoteurs et motocyclettes, et
habituellement associé à la poignée gauche du guidon.

Les commandes électriques classiques regroupées sur
le guidon d'un véhicule de ce type sont, d'une part, la commande d'éclairage avec deux niveaux d'éclairement, feux de
croisement -feux de route et, d'autre part, la commande des
feux indicateurs des changements de direction. A ces fonctions s'ajoute généralement la commande de l'avertisseur
sonore .

Le plus souvent, ces diverses fonctions électriques
sont commandées à partir de boutons distincts, parfois éloignés les uns des autres sur le guidon, ce qui augmente
l'encombrement total des commandes électriques et rend
difficile leur actionnement manuel, en particulier avec des
gants.

Pour remédier à cela, le brevet américain 4.191.866
décrit un interrupteur à trois fonctions comprenant un
boîtier dans lequel deux chariots, basculant autour d'axes
orthogonaux, sont en mesure, sous l'action d'un bouton de
commande traversant la face du boîtier et assurant aussi
la commande d'avertisseur sonore, de déplacer des balais
de commutation, pour les amener sur l'un ou l'autre des
plots fixes que comportent respectivement le boîtier et
l'un des chariots, pour commander les fonctions éclairage
et indicateurs de changement de direction. Ces plots sont
formés à l'extrémité de barrettes métalliques qui, comme
les balais et les plots de contact de l'avertisseur, sont
raccordées aux divers circuits de commande et d'alimentation par des fils souples. Le recours à ces derniers pour
relier les contacts des chariots basculants, apporte deux
inconvénients: le premier provient du fait que, quelle que
soit la souplesse des conducteurs, ces derniers, d'une part,
exercent une résistance lors de la manipulation du bouton
de commande et, d'autre part, peuvent se sectionner après

2

de nombreuses manipulations; le second résulte de l'encombrement de ces moyens de jonction,encombrement qui limite le nombre de conducteurs de jonction pouvant être disposés dans le boîtier,donc réduit le nombre de positions du bouton et le nombre de fonctions pouvant être commandées. Ainsi,par exemple,dans le dispositif de ce brevet américain,la mise en service des fonctions éclairage est réalisée par un interrupteur indépendant et hors du boîtier.

La présente invention a pour but de remédier à ces divers inconvénients en fournissant un dispositif permettant l'intégration    dans un même boîtier de toutes les commandes électriques nécessaires aux fonctions de service du véhicule en utilisant des moyens peu onéreux et fiables.

Ce dispositif est du type composé d'un boîtier rapportable sur le guidon du véhicule et d'un bouton de commande déplaçable à travers une ouverture du boîtier pour commander des fonctions spécifiques au moyen de chariots intermédiaires portant des moyens de contact aptes à coopérer,selon leur position,indexée ou non,avec des moyens de contact électrique répartis dans le boîtier.

Selon l'invention,les chariots intermédiaires,de type coulissant suivant des directions perpendiculaires et, respectivement,transversal et longitudinal,comportent chacun au moins un curseur de jonction apte à coopérer avec des pistes conductrices fixes qui,ayant l'exclusivité des fonctions d'alimentation et de distribution,affleurent la face en vis-à-vis du curseur correspondant et font partie de barrettes noyées dans des éléments fixes de la poignée et aboutissant à des zones de jonction avec des conducteurs ,les pistes pour le chariot transversal étant longitudinales,continues,espacées transversalement et dans le plan de la face interne du boîtier qui est en contact de frottement avec ce chariot,tandis que les pistes pour le chariot longitudinal sont transversales,espacées longitudinalement et dans le plan d'une face de contact avec le curseur,face qui est réalisée sur un collier solidaire

3

du boîtier.

Grâce au recours,d'une part,à des pistes conductrices fixes assurant à la fois,mais séparément,la fonction d'alimentation,c'est-à-dire d'amenée du courant et de distribution,c'est-à-dire d'alimentation d'une fonction et, d'autre part,à des curseurs n'assurant que la fonction de jonction,c'est-à-dire de mise en communication de l'une des pistes d'alimentation avec l'une des pistes de distribution,les chariots sont débarrassés de toutes connexions électriques.Ils ont donc un fonctionnement très fiable dans le temps et n'opposent que de faibles résistances de frottement à leurs manipulations par l'unique bouton de commande.Par ailleurs,ce mode de connexion ,associé à l'utilisation de chariots ayant des déplacements coulissants perpendiculaires permet d'augmenter le nombre de pistes et le nombre de fonctions commandées par un chariot sans augmenter l'encombrement général du commutateur et sans altérer la possibilité de combinaisons des positions des deux chariots.

Dans une forme d'exécution de l'invention,le chariot longitudinal est solidaire de deux curseurs latéraux et comporte une rainure centrale coopérant avec une nervure longitudinale qui,saillant du collier interne de la poignée,sépare deux faces de frottement munies chacune de pistes aptes à coopérer avec les curseurs précités,tandis que le chariot transversal est muni d'une rainure assurant sa liaison avec le chariot longitudinal et son guidage en translation,entre ce dernier et le boîtier,en coopérant avec une nervure transversale de ce chariot longitudinal.

Cet agencement assure la liaison et le guidage des chariots par des moyens simples et peu encombrants permettant d'augmenter le nombre de pistes si besoin est.

De toute façon,l'invention sera mieux comprise à l'aide de la description qui suit,en référence au dessin schématique annexé représentant,à titre d'exemple non limitatif,une forme d'exécution de ce commutateur électrique de poignée dans le cas où son bouton de commande peut occuper neuf positions:

Figure 1 est une vue générale ,en perspective,d'une poignée de cyclomoteur,équipée de commutateur selon l'invention,

Figure 2 est une vue partielle,en coupe longitudinale, de la poignée de figure 1,montrant la structure interne de ce commutateur électrique,

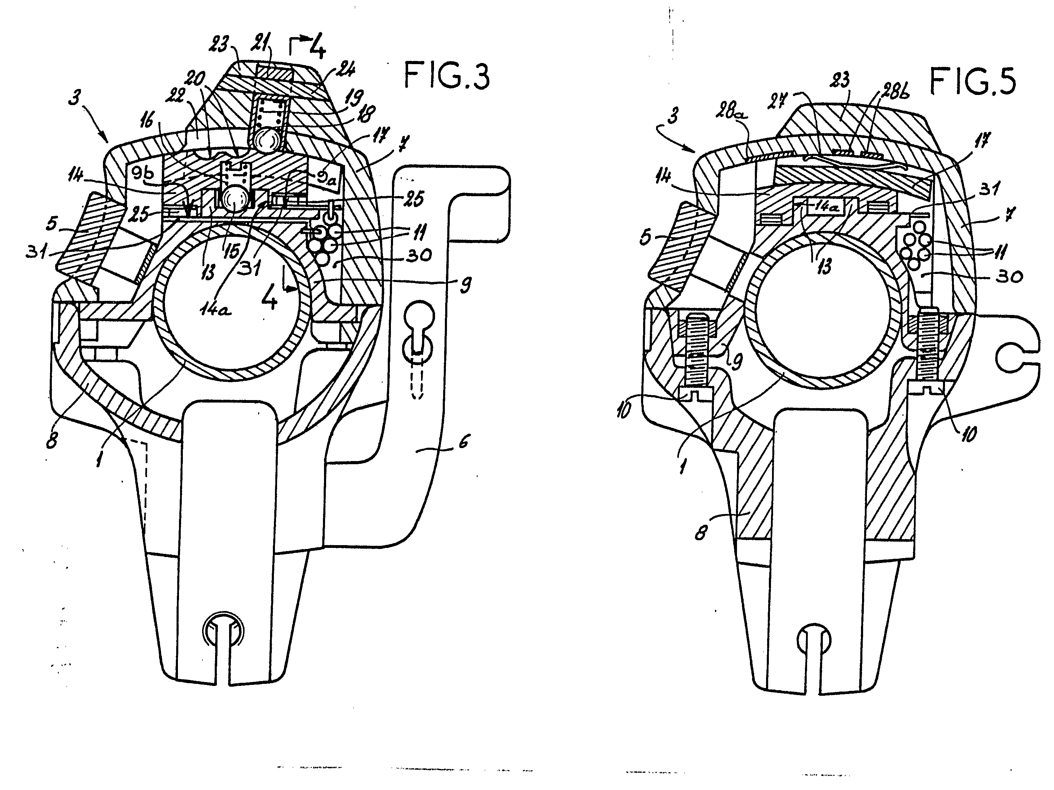

Figure 3 en est une vue en coupe transversale suivant 3-3 de fig.2;

Figure 4 en est une coupe longitudinale partielle, suivant 4-4 de figure 3;

Figure 5 en est une coupe transversale suivant 5-5 de figure 3.

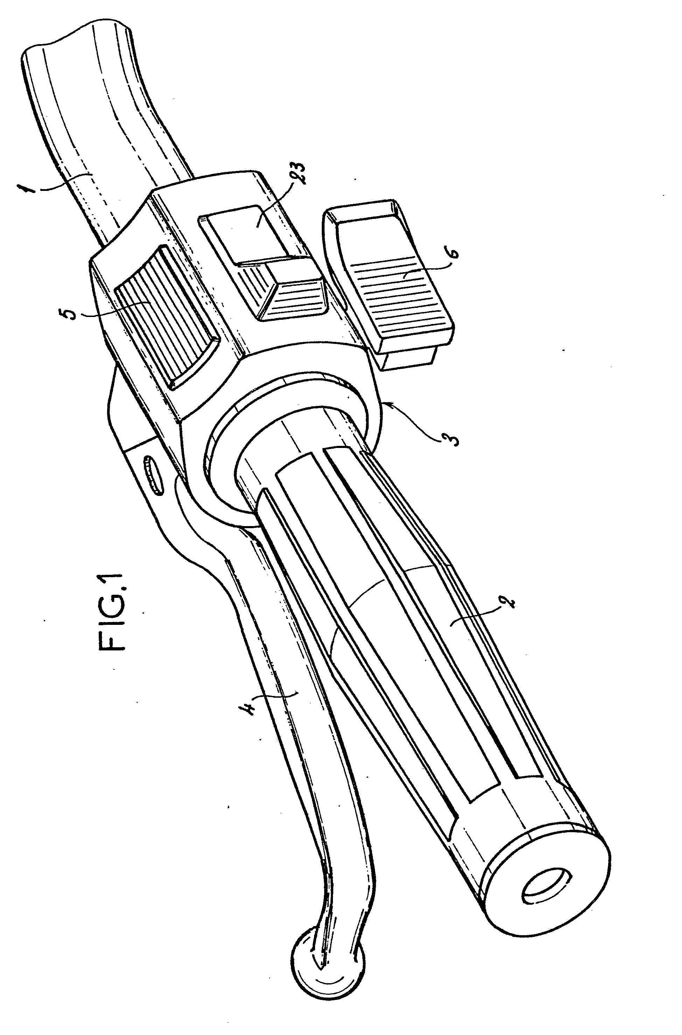

La figure 1 montre l'extrémité gauche d'un guidon 1 de cyclomoteur munie d'une poignée proprement dite 2 et d'un bloc 3 sur lequel est monté pivotant le levier de frein 4. Le bloc 3 supporte le commutateur électrique faisant plus particulièrement l'objet de l'invention,la commande de l'avertisseur sonore avec son bouton-poussoir 5,et la manette de décompression 6.

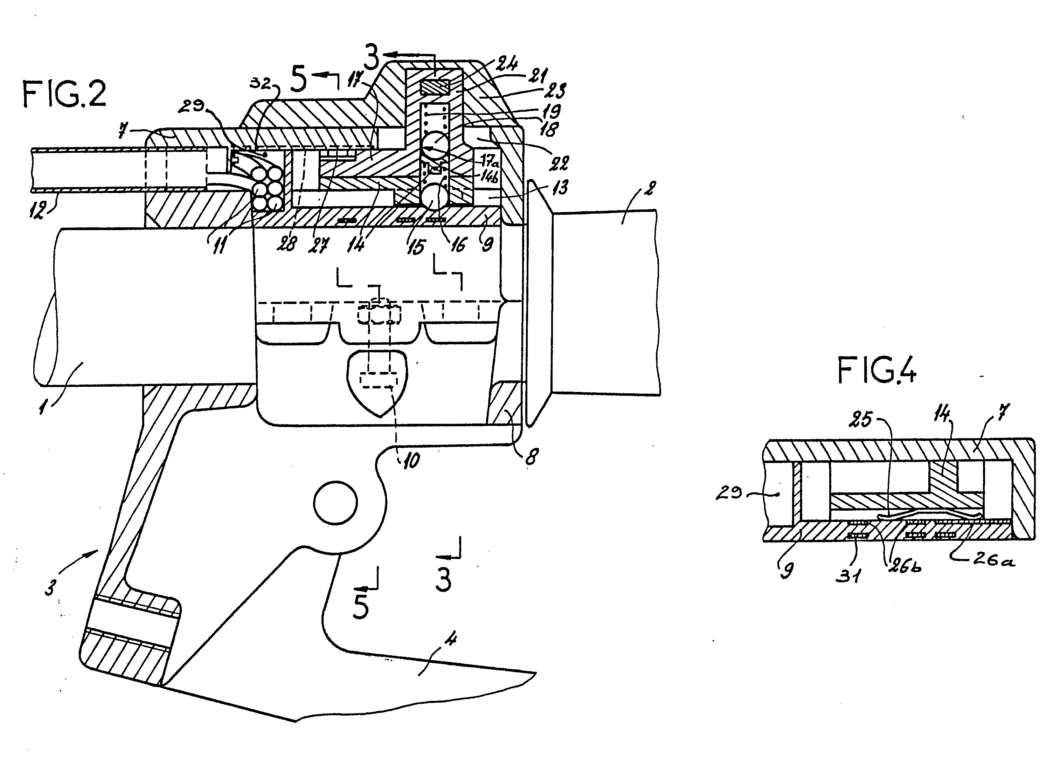

Le bloc 3 est composé d'un boîtier extérieur formé par deux demi-coquilles accolées 7 et 8. Il comprend,en outre, un collier interne 9 lié à la demi-coquille 8 par des vis 10 visibles aux figures 2 et 5. Le serrage de ces vis 10 assure la tenue du bloc 3 sur le tube du guidon 1 qui le traverse de part en part.Un faisceau de fils électriques 11 entourés d'une gaine 12 aboutit au bloc 3 et pénètre dans des zones de jonction,respectivement postérieure 29 et latérale 30 ménagées entre la demi-coquille 7 et le collier 9.

Le collier 9 comporte une nervure longitudinale centrale 13 formant saillie et bordée par deux faces de frottement 9a et 9b. Cette nervure coopère avec une rainure 14a d'un chariot longitudinal 14 pour assurer le guidage en translation de celui-ci.Une bille 15,disposée dans un logement du chariot 14 et poussée par un ressort 16,assure

5

l'indexation de ce chariot dans une position centrale en
s'engageant dans une cavité ménagée dans le collier 9.

Le chariot longitudinal 14 sert de support et de guide
à un chariot transversal 17 déplaçable suivant une trajectoire en léger arc de cercle entre.ce chariot longitudinal
14 et la demi-coquille 7.A cet effet,le chariot longitudinal 14 comporte une nervure transversale 14b,visible figure 2,coopérant avec une rainure 17a du chariot transversal
17. Une bille 18,disposée dans un logement débouchant dans
la rainure 17a du chariot 17 et poussée par un ressort,
assure l'indexation de ce chariot transversal 17 dans
trois positions en s'engageant dans l'une ou l'autre des
cavités 20 ménagées dans le chariot longitudinal 14.

Le chariot transversal 17 est solidaire d'une tête
21 qui traverse la demi-coquille 7 par une ouverture 22
pour recevoir un bouton de commande extérieur 23 auquel
elle est liée par une goupille 24. Ce bouton de commande
est volumineux pour pouvoir être actionné même avec des
gants et pour obturer totalement l'ouverture 22,quelle que
soit sa position,et assurer ainsi l'étanchéité du boîtier.

La combinaison des déplacements des deux chariots permet d'obtenir un nombre de positions égal au produit du
nombre de positions de chacun des chariots.Dans cette forme d'exécution,les deux chariots ayant chacun trois positions,il est donc possible d'obtenir neuf positions.

Dans cette forme d'exécution,le déplacement longitudinal du bouton de commande 23 et du chariot 14 par l'intermédiaire de celui 17,est utilisé pour la commande des feux
indicateurs de changement de direction. A cet effet,le
chariot 14 est solidaire de deux curseurs 25,de jonction
électrique,coopérant avec des pistes conductrices fixes,
respectivement,d'alimentation 26a et de distribution 26b.
Ces pistes affleurent chacune des faces 9a et 9b du collier 9 en contact avec les curseurs 25. Ces pistes constituent l'une des extrémités de barrettes conductrices 31
noyées dans le collier 9 et raccordées par leur autre extrémité aux fils électriques 11 correspondants aboutissant, comme montré à la figure 5,dans la zone de jonction latérale 30.Comme montré figure 4,les pistes 26a et 26b sont transversales et espacées longitudinalement,celles 26a étant plus larges que celles 26b pour assurer l'alimentation de ces dernières dans les deux positions extrêmes du chariot longitudinal 14. De la sorte,lorsque le bouton 23 est en position centrale,indexée par la bille 15,les indicateurs de changement de direction ne sont pas alimentés, tandis que lorsqu'il est dans l'une ou l'autre de ses positions extrêmes,le curseur assure la jonction électrique entre la piste d'alimentation 26a et la piste de distribution correspondante 26b.

Il est à noter que,grâce à sa structure et,notamment à l'utilisation de pistes fixes dont la liaison avec la source de courant et les organes commandés est assurée par des barrettes noyées,il est possible d'augmenter ce nombre de pistes sans augmenter considérablement l'encombrement.Ainsi,dans la forme d'exécution représentée ,et alors même qu'un agent curseur 25 et des pistes correspondantes sont en général suffisants pour commander les indicateurs de changement de direction,le chariot 14 comporte un deuxième curseur et des pistes associées pour assurer une commande différenciée des indicateurs de changement de direction,respectivement avant et arrière.

Le déplacement transversal du bouton 23 et du chariot transversal 17 est utilisé pour commander l'éclairage et sélectionner sa puissance.A cet effet,le chariot 17 porte un curseur de jonction 27,visible figure 2 et surtout figure 5,coopérant avec des pistes conductrices fixes,respectivement d'alimentation 28a et de distribution 28b.Ces pistes,qui affleurent la face interne de la demi-coquille 7,sont formées par l'une des faces de barrettes 32 noyées dans la coquille et dont les extrémités postérieures sont raccordées aux fils 11 correspondants dans la zone de jonction postérieure 29 du boîtier.Comme montré figure 5,les pistes 28a et 28b sont longitudinales, continues et espacées transversalement,celle 28a étant plus large que celle 28b ,de manière à permettre l'alimentation de l'une ou l'autre de ces dernières par le curseur de jonction 27 pour deux des positions de ce dernier.Dans cette forme d'exécution,les pistes sont disposées les unes par rapport aux autres de manière que,pour une position extrême du bouton 23 et du chariot 17,l'éclairage ne soit pas en fonction,et que pour la position intermédiaire et l'autre position extrême de ce bouton,l'éclairage soit en fonction et,respectivement,dans les positions feux de croisement et feux de route.

L'utilisation de pistes 28a et 28b continues permet d'assurer la constance des fonctions déterminées par la position transversale du chariot 17,quelles que soient les variations de sa position longitudinale,donc quelle que soit la position de la commande des indicateurs de changement de direction.

Bien entendu,le boîtier comporte,sur sa face extérieure,des repères et symboles facilitant l'identification des fonctions assurées dans les diverses positions du bouton 23.

Ce dispositif,qui a été décrit dans le cas de son application à la satisfaction de six fonctions,à savoir: absence de clignotement,clignotement droit,clignotement gauche,absence d'éclairage,éclairage en feux de croisement,éclairage en feux de route,ces fonctions se cumulant à travers neuf positions,peut aussi satisfaire des fonctions supplémentaires,telles que:éclairage en veilleuse, appel en feux de route,mise en route d'accessoires nocturnes ou diurnes.Pour cela,il suffit de rajouter une ou plusieurs pistes de distribution dans la trajectoire de l'un des curseurs,sans que cela intervienne sur l'encombrement du boitier et sur la fiabilité du commutateur.

En outre,toutes les liaisons électriques de ce commutateur sont assurées par déplacement avec frottement de curseurs,donc par des moyens assurant l'auto-nettoyage des contacts à chaque mouvement du bouton,évitant ainsi le charbonnage de ces contacts,comme cela se produit dans

8

les dispositifs où les liaisons électriques sont assurées par simple pression de contact.Ce mode de liaison par balayage de contact permet donc d'obtenir la fiabilité de la commutation.

Enfin,le rassemblement sur une même poignée,des commandes de toutes les fonctions électriques du cyclomoteur, permet d'avoir recours à un unique faisceau électrique ,donc contribue à la réduction du coût de fabrication du véhicule et à l'amélioration de son esthétique.

9
-REVENDICATIONS-

1-Commutateur électrique de poignée pour cyclomoteurs, motocyclettes et similaires,du type composé d'un boîtier (7-8)rapportable sur le guidon (1)du véhicule et d'un bouton de commande (23) déplaçable à travers une ouverture (22) du boîtier pour commander des fonctions spécifiques au moyen de chariots intermédiaires (14-17) portant des moyens de contact aptes à coopérer,selon leur position, indexée ou non,avec des moyens fixes de contact électrique répartis dans le boîtier,caractérisé en ce que les chariots intermédiaires,de type coulissant suivant des directions perpendiculaires et,respectivement,transversal (17) et longitudinal (14),comportent chacun au moins un curseur de jonction (25-27) apte à coopérer avec des pistes conductrices fixes (26a-26b-28a-28b)qui,ayant l'exclusivité des fonctions d'alimentation et de distribution,affleurent la face en vis-à-vis du curseur correspondant et font partie de barrettes (31-32)noyées dans des éléments fixes de la poignée et aboutissant à des zones (29-30) de jonction avec des conducteurs (11),les pistes (28a-28b)pour le chariot transversal (17) étant longitudinales,continues, espacées transversalement et dans le plan de la face interne du boîtier qui est en contact de frottement avec le chariot (17),tandis que les pistes (26a-26b)pour le chariot longitudinal (14) sont transversales,espacées longitudinalement et dans le plan d'une face de contact avec le curseur(25),face qui est réalisée sur un collier (9) solidaire du boîtier.

2-Commutateur selon la revendication 1,caractérisé en ce que le chariot longitudinal (14) est solidaire de deux curseurs latéraux (25) et comporte une rainure centrale (14a) coopérant avec une nervure longitudinale (13) qui, saillant du collier interne (9) de la poignée,sépare deux faces de frottement (9a-9b),munies chacune de pistes (26a-26b) aptes à coopérer avec le curseur (25)précité,tandis que le chariot transversal (17) est muni d'une rainure (17a) assurant sa liaison avec le chariot longitudinal (14) et son guidage en translation,entre ce dernier et le boîtier,en coopérant avec une nervure transversale (14b) de
ce chariot longitudinal.

3-Commutateur selon l'une quelconque des revendications 1 et 2,caractérisé en ce que,lorsque l'indexation
des positions des chariots est assurée par des billes
poussées par ressort et disposées dans des logements du
chariot,la bille (15) d'indexation du chariot longitudinal
(14) coopère avec au moins une cavité réalisée dans le
collier (9),tandis que celle (18) du chariot transversal
(17) coopère avec au moins une cavité (20) ménagée dans
le chariot longitudinal (14).

FIG.1

0050085

-1/3-

FIG.2

FIG.4

0050085

-2/3-

FIG.3

FIG.5

0050085

**0050085**

Numéro de la demande

**RAPPORT DE RECHERCHE EUROPEENNE**

Office européen des brevets

EP 81 42 0143

| Catégorie | Citation du document avec indication, en cas de besoin, des parties pertinentes | Revendica-tion concernée |
|---|---|---|
| D | US - A - 4 191 866 (KUNIHIKO NAKA JIMA) <br><br> * colonne 2, lignes 50-68; colonne 3, lignes 1-39 * | 1 |
| | US - A - 3 030 459 (H.U. ELLIOTT) <br><br> * colonne 1, lignes 61-72; colonne 2, lignes 1-63 * | 1-3 |
| | US - A - 2 589 025 (H.S. PHELPS) <br><br> * colonne 3, lignes 22-57 * | 1 |
| | US - A - 4 041 258 (SHINICHI HARADA) <br><br> * colonne 3, lignes 7-16 * | 1 |

**DOCUMENTS CONSIDERES COMME PERTINENTS**

**CLASSEMENT DE LA DEMANDE (Int. Cl. 3)**

H 01 H  9/06
H 01 H 25/06
B 62 J  5/16

**DOMAINES TECHNIQUES RECHERCHES (Int. Cl. 3)**

H 01 H  9/06
        25/04
        25/06
B 62 J  5/16

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 11.01.1982 | LIBBERECHT |

OEB Form 1503.1  06.78